# EUROPEAN PATENT APPLICATION

(11) **EP 3 537 195 A2**
(43) Date of publication of application: **11.09.2019**
(21) Application number: 19157084.5
(22) Date of filing: 14.02.2019
(51) Int. Cl.: G02B 6/38

(54) **LC-TYPE SIMPLIFIED CONNECTOR PLUG AND OPTICAL CONNECTOR DEVICE USING THE PLUG**

(30) Priority: 08.03.2018 JP 2018041994
(71) Applicant: Sanwa Denki Kogyo Co., Ltd., Tokyo (JP)
(72) Inventor: SATO, Takashi, Nakano-ku,, Tokyo (JP)
(74) Representative: TBK

(57) **Abstract**

In a pre-assembly type LC-type simplified connector plug (P1) including two parts, that is, a coupling sleeve (S) and a ferrule (F), the coupling sleeve (S) is provided with a main body (1) whose outer peripheral surface is formed into a quadrangle and a latch (2) for engaging with and disengaging from an LC-type adapter (Q) provided on an upper surface of the main body (1), the main body (1) has at the front end thereof a large-diameter cylindrical opening (3), and has at the center of the opening (3) a small-diameter cylindrical ferrule insertion hole (4) for fitting and retaining the ferrule (F), and opening (3) and the ferrule insertion hole (4) are communicated with an insertion hole for an optical fiber core wire passing through the substantially center of the main body (1).

## Description

### TECHNICAL FIELD

The present invention relates to an LC-type simplified connector plug with a release lever which is used when an optical fiber is connected, and an optical connector device using the plug.

### BACKGROUND ART

In recent years, in order for ends of optical fibers to optically connect, there has been used an LC-type adapter in which a fitting portion for inserting an optical connector plug is provided at the both ends, the optical connector plug is internally inserted into and fitted to the inner center from the both ends of the fitting portion, and a sleeve which abuttingly retains ferrules of the both connector plugs is provided. In this case, an LC-type connector plug with a spring is inserted into plug insertion holes at the both ends of the LC-type adapter. At this time, the front ends of the ferrules of the both plugs are butt-connected while being elastically compressed each other from the rear side within a split sleeve.

As shown in Figs. 13A to 13B and Fig. 14 (see Figs. 15A and 15B), as the optical connector plug which is optically connected by the LC-type adapter in this way, an LC-type connector plug P includes a frame 120 which retains a ferrule F, a spring 140 which presses the frame 120 toward the front end side, a coupling sleeve 101 which accommodates therein the ferrule F and the spring 140, and a cylindrical extender cap 108 which retains the rear end of the spring 140 and fits the rear ends thereof to the coupling sleeve 101. The LC-type connector plug P is inserted into plug insertion holes R1 and R2 from the both ends of an LC-type adapter Q.

The coupling sleeve 101 whose outer peripheral surface is formed into a quadrangle and has on an upper surface thereof a latch 102 for engaging with and disengaging from the LC-type adapter Q, and has at the front end through which a large-diameter cylindrical opening 103 passing through the substantially center of the coupling sleeve 101. The latch 102 is integrally provided on the coupling sleeve 101, and has a support portion 102A which is incliningly extended so as to be gradually away from an outer surface of the coupling sleeve 101 from the front end toward the rear end of the coupling sleeve 101, and a projection 102B which protrudes by a predetermined amount toward the opposite side of the outer surface of the coupling sleeve 101 on a surface of the front end of the support portion 102A. Further, a locking projection 102C is provided at the both sides in a width direction of the substantially center of the support portion 102A in an extending direction thereof, and the optical connector plug P is configured to be engaged with the LC-type adapter Q via the locking projection 102C.

The frame 120 has at the front end thereof a ferrule flange portion 120A which retains the rear end of the ferrule F, and a protective cylindrical portion 120B which protrudes from the rear side of the ferrule flange portion 120A, and a tube 130 for leading out an optical fiber core wire L which extends out of the rear end of the ferrule F is fitted to the outer side of the protective cylindrical portion 120B.

The extender cap 108 is for being internally inserted into the rear end opening side of the coupling sleeve 101 and for locking and retaining the spring 140. The extender cap 108 has on the side thereof a locking claw 116 for being locked in a locking hole 115 which is formed on the side of an outer peripheral surface of the coupling sleeve 101. The extender cap 108 has at the rear side thereof a large-diameter quadrangle flange portion 111 which is locked to an opening edge at the rear end of the coupling sleeve 101, and the flange portion 111 has at the rear end thereof a cylindrical projection 112 which can be fitted to an opening at the front end of a boot B.

Further, as shown in Patent Literature 1, there has been conventionally well known a multi-core optical connector including a plug frame which is provided at the front end thereof with a locking portion, a cylindrical slide knob which is slidingly fitted and externally inserted into the plug frame, a ferrule which is abuttingly retained at the center front end within the plug frame by a spring, an optical fiber at the front end of an optical cable which is passed through and fixed to the axial center of the ferrule, and a boot which is made of rubber.

Further, as shown in Patent Literature 2, there has been conventionally well known an optical connector plug having a light shielding function including a fixedly connected ferrule which connects an optical fiber from the optical cable side and whose front end surface is polished, a movable connection ferrule into and to which the optical fiber is previously inserted and bonded and whose both end surfaces are polished, a split sleeve which is for internally connecting the both ferrules, a light shielding member which is arranged inside of the split sleeve, and a ferrule holder which is provided at the movable connection ferrule side for retaining the both ferrules to put into a state where an optional gap is formed between the both ferrules via a coil spring arranged so as to cover an outer periphery of the light shielding member, in which a light shielding plate of the light shielding member is permanently interposed in the gap.

### CITATION LIST

### PATENT LITERATURE

PATENT LITERATURE 1: Japanese Unexamined Patent Application Publication No. 2002-6176
PATENT LITERATURE 2: Japanese Unexamined Patent Application Publication No. 2008-116518

### SUMMARY OF INVENTION

### TECHNICAL PROBLEM

However, in each of the conventional optical connector plugs mentioned above, the multi-core optical connector disclosed in the patent literature 1, and the optical connector plug disclosed in the patent literature 2, the plugs inserted from the both ends of the adapter have both a built-in "spring". The plug gives rise to the increased number of the parts complicated structure, multi processed assembly, resulting in upsizing thereof and an increased product cost.

The present invention is made in consideration of the conventionally existing various circumstances as mentioned above, and an object of the present invention is to provide an LC-type simplified connector plug in which the LC-type connector plug inserted into one plug insertion hole of an LC-type adapter which can achieve a simplified plug with no "spring". Consequently, the present invention is able to provide a simple structure, easy assembly process, downsized, and low cost LC-type simplified connector plug, as compared with the conventional product, and an optical connector device using the plug.

### SOLUTION TO PROBLEM

In order to achieve the object mentioned above, an LC-type simplified connector plug according to the present invention is a pre-assembly type LC-type simplified connector plug comprising: a coupling sleeve; and a ferrule, wherein the coupling sleeve comprises: a main body whose outer peripheral surface is formed into a quadrangle; and a latch for engaging with and disengaging from the LC-type adapter provided on an upper surface of the main body, wherein the main body has at the head thereof a large-diameter cylindrical opening, and has at the center of the opening a small-diameter cylindrical ferrule fitting insertion hole for fitting and retaining the ferrule so that the opening and the ferrule fitting insertion hole are connected consecutively to an insertion hole for an optical fiber core wire passing through the substantially center of the main body, wherein the rear end of the ferrule is inserted into the ferrule fitting insertion hole from the opening side, and wherein the front end of the ferrule is protruded out of an opening of the front end of the main body.

The main body has at the tail thereof a cylindrical projection which communicates with the ferrule fitting insertion hole, and an opening at the front end of a boot is formed in a fittable manner in the projection opening, as occasion demands.

An LC-type adapter comprising: a fitting portion provided at the both ends thereof for inserting an optical connector plug; and a sleeve which is provided at the inner center thereof, into and to which the optical connector plug is inserted and fitted from the both ends of the fitting portion, and abuttingly retains the ferrules of the both connector plugs, wherein the LC-type adaptor comprises at either one of the fitting portions at the both ends thereof a coupling sleeve and a ferrule, the coupling sleeve comprises a main body whose outer peripheral surface is formed into a quadrangle, and a latch for engaging with and disengaging from the LC-type adapter provided on an upper surface of the main body, the main body has at the head thereof a large-diameter cylindrical opening, and has at the center of the opening a small-diameter cylindrical ferrule fitting insertion hole for fitting and retaining the ferrule so that the opening and the ferrule fitting insertion hole are connected consecutively to an insertion hole of an optical fiber core wire passing through the substantially center of the main body, a pre-assembly type LC-type simplified connector plug in which the rear end side of the ferrule is inserted into the ferrule fitting insertion hole from the opening side, and the front end of the ferrule is protruded out of an opening at the head of the main body is fitted, and wherein an optical connector adaptor comprises at the fitting portion a frame which retains the ferrule, a spring which presses the frame toward the front end side thereof, a coupling sleeve which accommodates the ferrule and the spring, and an extender cap which retains the rear end of the spring and fits the spring to the coupling sleeve.

Further, an assembly type LC-type simplified connector plug comprising: a coupling sleeve; a ferrule; and a holder, wherein the coupling sleeve comprises: a main body whose outer peripheral surface is formed into a quadrangle; and a latch for engaging with and disengaging from the LC-type adapter provided on an upper surface of the main body, wherein the main body has at the head thereof a large-diameter cylindrical opening, and has at the inner center of the opening a cylindrical holder fitting insertion hole whose front end for fitting and retaining the head of the holder has a small-diameter portion and whose rear end has a large-diameter portion so that the opening and the holder fitting insertion hole are connected consecutively to an insertion hole for an optical fiber wire passing through the substantially center of the main body, wherein the holder has at the front end thereof a ferrule fitting insertion hole into which the rear end of the ferrule is inserted, and has an insertion hole for an optical fiber core wire which is communicated with the rear side of the ferrule fitting insertion hole, wherein a ferrule is inserted into the ferrule fitting insertion hole at the head of the holder, and wherein the holder with the ferrule is integrated so as to be fitted and retained by the small-diameter portion at the front end of the holder fitting insertion hole of the main body, and the ferrule is protruded out of the head of the main body.

The coupling sleeve comprises: a main body whose outer peripheral surface is formed into a quadrangle; and a latch for engaging with and disengaging from the LC-type adapter provided on an upper surface of the main body, wherein the main body has at the head thereof a large-diameter cylindrical opening, and has at the center of the opening a cylindrical holder fitting insertion hole so that the opening and the holder fitting insertion hole are connected consecutively passing through the substantially center of the main body, and wherein a locking hole for locking a locking claw which is provided on the side of the holder fitted to the holder fitting insertion hole is formed on the side of an outer peripheral surface of the main body.

The LC-type simplified connector plug according to claim 4, wherein the holder has at the front end thereof a ferrule fitting insertion hole into which the rear end of the ferrule is inserted, and a small-diameter protruding portion which is fitted and retained by a small-diameter portion at the front end of the holder fitting insertion hole of the main body, and has at the tail of the holder a large-diameter quadrangle flange portion which is locked to the tail of the main body, and has at the side of the holder a locking claw for being locked to a locking hole which is formed on the side of an outer peripheral surface of the main body.

The holder has at the tail thereof a cylindrical projection which is communicated with the ferrule fitting insertion hole and an insertion hole for an optical fiber core wire, and wherein an opening at the front end of a boot is fittingly formed in the projection, as occasion demands.

An optical connector device in an LC-type adapter, the LC-type adapter comprising: a fitting portion for inserting an optical connector plug provided at the both ends thereof; and a sleeve which is provided at the inner center thereof, into and to which the ferrule of the optical connector plug is inserted and fitted from the both ends thereof, and abuttingly retains the ferrules of the both connector plugs, wherein the LC-type adaptor comprises in either one of the fitting portions at the both ends thereof a coupling sleeve, a ferrule and a holder, the coupling sleeve comprises a main body whose outer peripheral surface is formed into a quadrangle, and a latch for engaging with and disengaging from the LC-type adapter provided on an upper surface of the main body, wherein the main body has at the head thereof a large-diameter cylindrical opening, and has at the inner center of the opening a cylindrical holder fitting insertion hole whose front end for fitting and retaining the head of the holder has a small-diameter portion and whose rear end has a large-diameter portion so that the opening and the holder insertion hole are formed consecutively passing through the substantially center of the main body, wherein the holder has at the front end thereof a ferrule insertion hole for inserting the ferrule, an insertion hole for an optical fiber core wire which is communicated with the rear end of the ferrule insertion hole, and a small-diameter protrusion which is fitted and retained by a small-diameter portion at the front end of the holder insertion hole of the main body, as well as has at the rear end side a large-diameter quadrangle flange portion which is locked to the rear of the main body, and has at the side a locking claw for being locked to a locking hole which is formed on the side of an outer peripheral surface of the main body, wherein a pre-assembly type LC-type simplified connector plug in which the rear end side of the ferrule is inserted into the ferrule insertion hole at the head of the holder, and the holder with the ferrule is integrated so as to be fitted and retained by the small-diameter portion at the front end of the holder insertion hole at the head of the holder is protruded out of the front end of the coupling sleeve, and wherein the LC-type adaptor comprises at the other fitting portion a frame which retains the ferrule, a spring which presses the frame toward the front end side, a coupling sleeve which accommodates the ferule and the spring, and an extender cap which retains the rear end of the spring and fits the spring to the coupling sleeve of the main body.

### EFFECT OF THE INVENTION

According to the present invention, the LC-type connector plug inserted into the one plug insertion hole of the LC-type adapter can achieve the simplified plug with no "spring". This provides the simple structure, easy assembly process, downsized, and low cost LC-type simplified connector plug, as compared with the conventional product, and the optical connector device using the plug.

More specifically, according to claims 1 to 3, the total parts are made up of two parts, that is, the coupling sleeve and the ferrule. This provides the simple structure, easy assembly process, downsized, and low cost optical connector device, as compared with the conventional product.

Further, according to claims 4 to 8, the total parts are made up of three parts, that is, the coupling sleeve, the ferrule and the holder. This exerts the same effects as those of claims 1 to 3 as compared with the conventional product. Further, since the coupling sleeve can employ the product having the same structure as the conventional product, the invention is excellent in convenience.

In the conventional optical connector device, a pair of two LC-type connector plugs are fitted from the both ends of the LC-type adapter, and the ferrules are abutted against (pressure contacted) each other within the sleeve which is arranged at the inner center of the LC-type adapter by two springs provided at the rear ends of the respective ferrules. However, the present invention shares (utilizes) the spring of the LC-type connector plug attached to the one side of the LC-type adapter, thereby dispensing with the spring in the LC-type simplified connector plug attached to the other side. This achieves downsizing, simplified assembly process and a low cost.

### BRIEF DESCRIPTION OF DRAWINGS

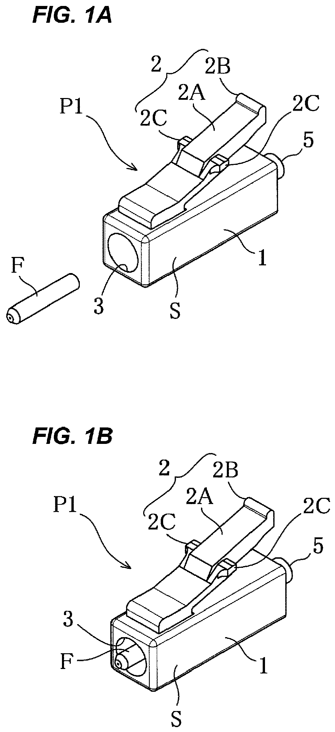

Figs. 1A and 1B show a pre-assembly type LC-type simplified connector plug according to a first embodiment of the present invention, in which Fig. 1A is a perspective view before a ferrule is attached to a coupling sleeve, and Fig. 1B is a perspective view after the ferrule is attached to the coupling sleeve.

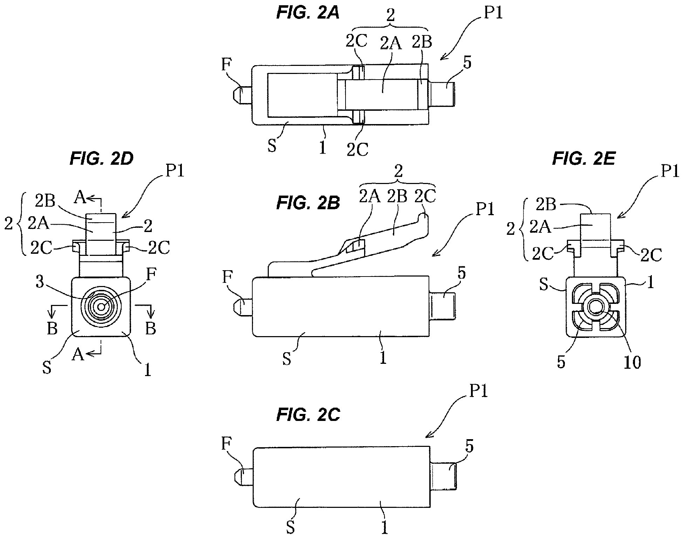

Figs. 2A to 2E show the pre-assembly type LC-type simplified connector plug, in which Fig. 2A is a plan view, Fig. 2B is a side view, Fig. 2C is a bottom view, Fig. 2D is a front view and Fig. 2E is a rear view.

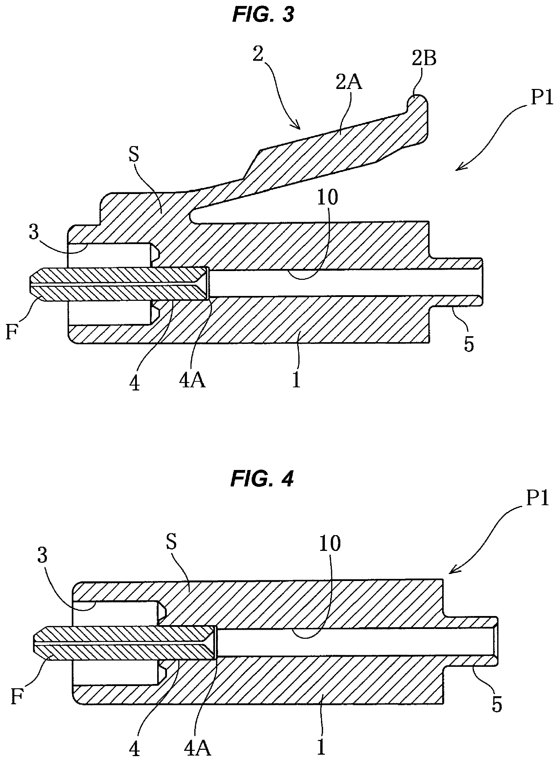

Fig. 3 is a cross sectional view taken along a line A-A in Fig. 2D;
Fig. 4 is a cross sectional view taken along a line B-B in Fig. 2D;

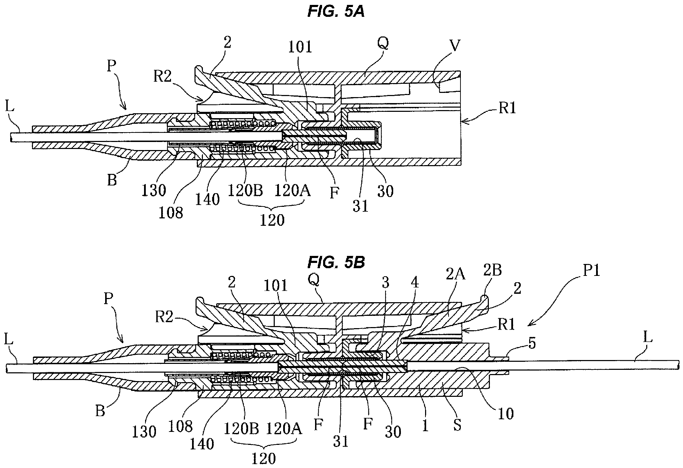

Figs. 5A and 5B show an LC-type adapter which optically connects end portions of optical fibers, in which Fig. 5A is a vertical cross sectional view in a state where a normal (standard type) LC-type connector plug is fitted to an insertion hole at the one end of the LC-type adapter, Fig. 5B is a vertical cross sectional view in a state where an LC-type simplified connector plug according to the present invention is fitted to an insertion hole at the other end of the LC-type adapter.

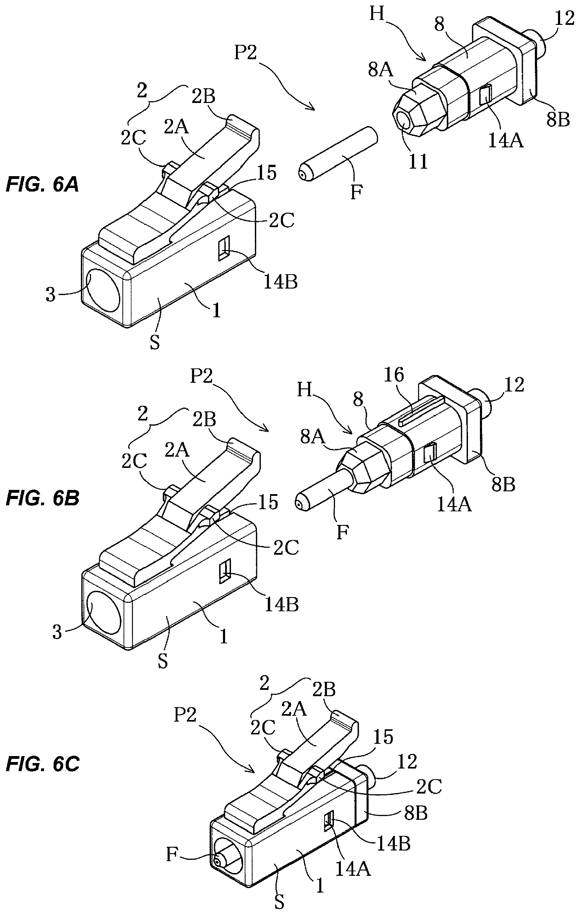

Figs. 6A to 6C show an assembly type LC-type simplified connector plug according to a second embodiment of the present invention, in which Fig. 6A is a perspective view before a ferrule is attached to a holder attached to a coupling sleeve, Fig. 6B is a perspective view after the ferrule is attached, and Fig. 6C is a perspective view of the LC-type simplified connector plug after assembly.

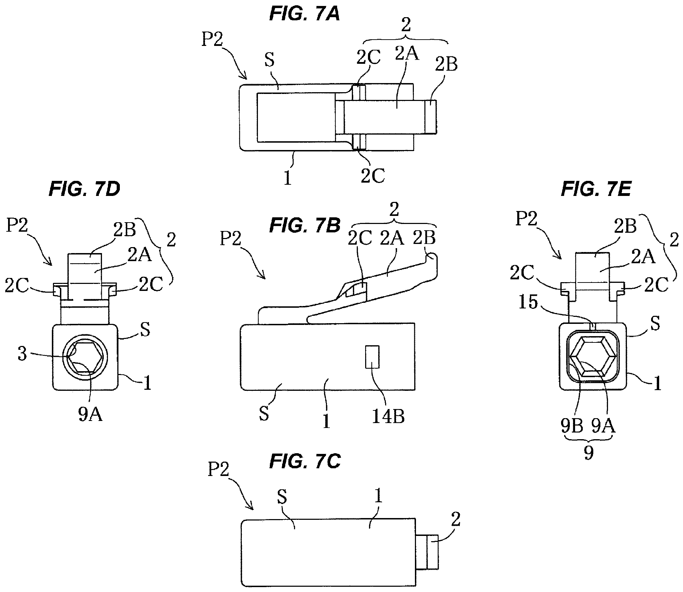

Figs. 7A to 7E show an assembly type LC-type simplified connector plug according to the second embodiment of the present invention, in which Fig. 7A is a plan view, Fig. 7B is a side view, Fig. 7C is a bottom view, Fig. 7D is a front view and Fig. 7E is a rearview.

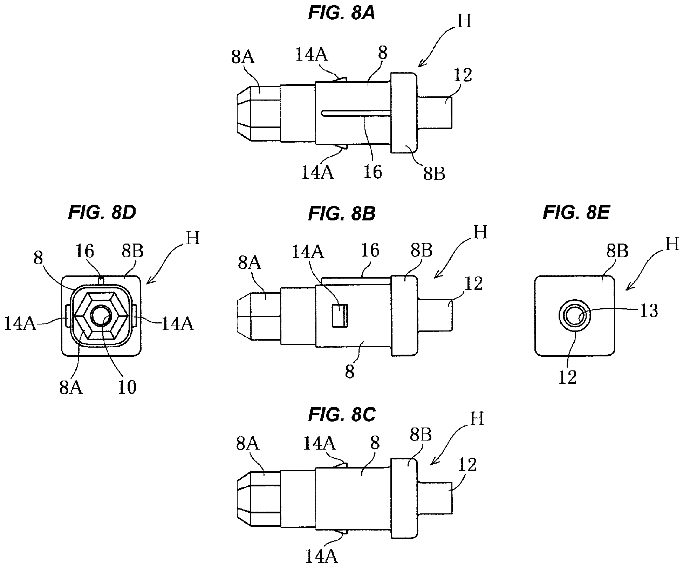

Figs. 8A to 8E show a holder of the assembly type LC-type simplified connector plug according to the second embodiment of the present invention, in which Fig. 8A is a plan view, Fig. 8B is a side view, Fig. 8C is a bottom view, Fig. 8D is a front view and Fig. 8E is a rear view.

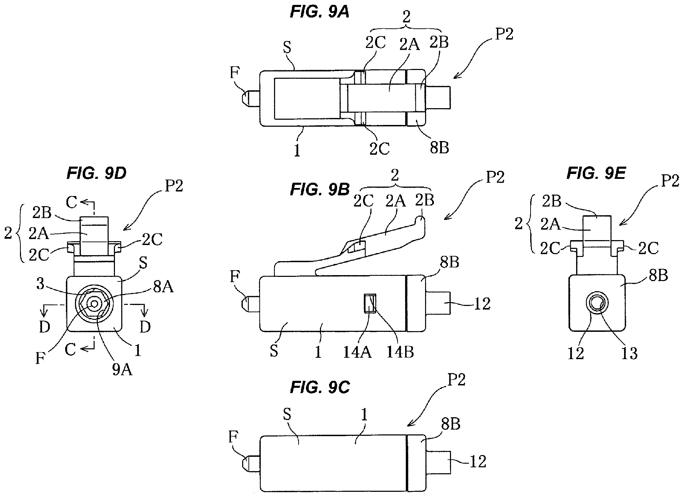

Figs. 9A to 9E show the assembly type LC-type simplified connector plug according to the second embodiment of the present invention, in which Fig. 9A is a plan view, Fig. 9B is a side view, Fig. 9C is a bottom view, Fig. 9D is a front view and Fig. 9E is a rear view.

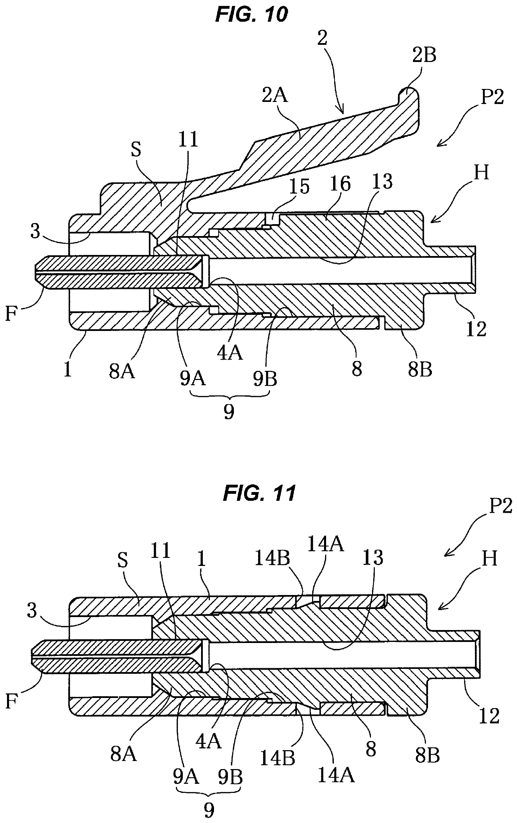

Fig. 10 is a cross sectional view taken along a line C-C in Fig. 9D.
Fig. 11 is a cross sectional view taken along a line D-D in Fig. 9D.

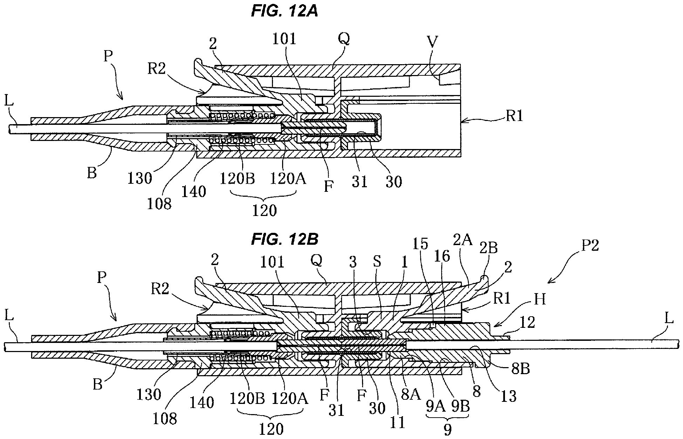

Figs. 12A and 12B show an LC-type adapter which optically connects end portions of optical fibers according to the second embodiment of the present invention, in which Fig. 12A is a vertical cross sectional view in a state where the normal (standard type) LC-type connector plug is fitted to an insertion hole at the one end of the LC-type adapter, Fig. 12B is a vertical cross sectional view in a state where an assembly type LC-type simplified connector plug according to the present invention is fitted to an insertion hole at the other end of the LC-type adapter.

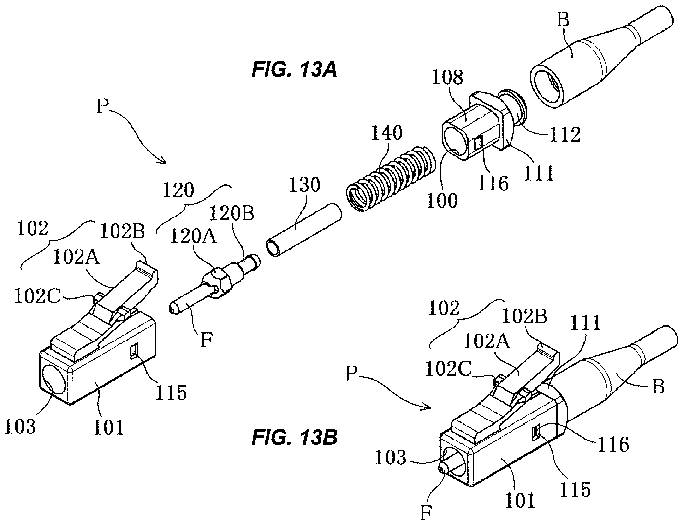

Figs. 13A and 13B show an optical connector plug according to the prior art, in which Fig. 13A is an exploded perspective view and Fig. 13B is a perspective view after assembly.

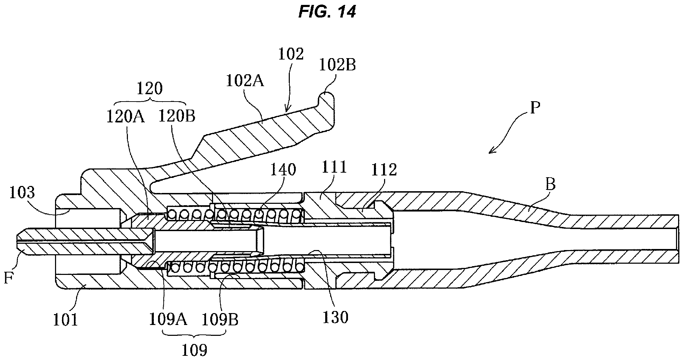

Fig. 14 is a vertical cross sectional view of the optical connector plug according to the prior art.

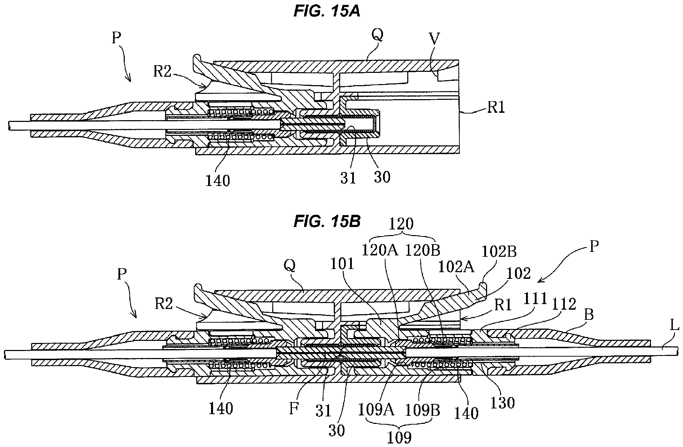

Figs. 15A and 15B show an LC-type adapter which optically connects end portions of optical fibers according to the prior art, in which Fig. 15A is a vertical cross sectional view in a state where the normal (standard type) LC-type connector plug is fitted to an insertion hole at one end of the LC-type adapter, Fig. 15B is a vertical cross sectional view in a state where the optical connector plug is fitted to an insertion hole at the other end of the LC-type adapter.

### DESCRIPTION OF EMBODIMENTS

A description will be given in detail below of an LC-type simplified connector plug according to the present invention and an optical connector device using the plug, with reference to the accompanying drawings.

### <First Embodiment

First of all, a description will be given in detail of a first embodiment according to the present invention with reference to Figs. 1A to 1B, Figs. 2A to 2E, Fig. 3, Fig. 4 and Figs. 5A to 5B.

### <Structure of pre-assembly type LC-type simplified connector plug>

An LC-type simplified connector plug P1 according to the first embodiment is a so-called pre-assembly type simplified plug which is able to integrate a coupling sleeve S with a ferrule F removing the need for an extra assembly by jigs. The LC-type simplified connector plug P1 is made up of two parts, that is, the coupling sleeve S and the ferrule F, as main constituent members.

As shown in Figs. 1A to 1B, Figs. 2A to 2E, Fig. 3 and Fig. 4, the coupling sleeve S is provided with a main body 1 whose outer peripheral surface is formed into a quadrangle, and a latch 2 which is provided on an upper surface of the main body 1 for engaging with and disengaging from an LC-type adapter Q, to be mentioned later. Further, as shown in Figs. 1A, 1B, 2A, 2B, 2D and 2E, the latch 2 is integrally provided on the main body 1 and has a support portion 2A which is incliningly extended so as to be gradually away from an outer surface of the main body 1 toward the rear end from the head of the main body 1, and a projection 2B which is provided on a surface of the front end of the support portion 2A to protrude by a predetermined amount toward the opposite side of the outer surface of the main body 1.

Further, as shown in Figs. 1A, 1B, 2A, 2B, 2D and 2E, a locking projection 2C is respectively provided on the both sides at the substantially center in an extending direction of the support portion 2A of the latch 2, and an LC-type simplified connector plug P1 is configured to be engaged with the LC-type adapter Q via the locking projection 2C (see Fig. 5C, to be mentioned later).

As shown in Figs. 3 and 4, a large-diameter cylindrical opening 3 and a small-diameter cylindrical ferrule fitting insertion hole 4 are connected consecutively to an insertion hole 10 of an optical fiber core wire L passing through the substantially center of the main body 1 at the front end of the main body 1 of the coupling sleeve S. The rear end side of the ferrule F inserted from the opening 3 side is inserted to the ferrule fitting insertion hole 4. The rear end of the ferrule F is locked by a step 4A which is formed at the front end side inside of the ferrule fitting insertion hole 4. As a result, the front end of the ferrule F is in a state where the front end of the ferrule F protrudes out of the opening 3 at the head of the main body 1.

Further, as shown in Figs. 1A, 1B, 2A, 2B, 2C, 2E, 3 and 4, the main body 1 of the coupling sleeve S has at the tail a cylindrical projection 5 which is communicated with the insertion hole 10 of the optical fiber core wire L, and an opening at the front end of a boot B shown in Figs. 13A to 13B can be fitted to the projection 5, as occasion demands.

Next, a description will be given of an example of use and operation of the first embodiment thus configured as above.

### <Optical connector device using pre-assembly type LC-type simplified connector plug>

As shown in Figs. 5A to 5B, an optical connector device according to the first embodiment is provided at the both ends of the LC-type adapter Q with fitting portions R1 and R2 (plug insertion holes) for inserting the optical connector plug, and is provided at the inner center with a sleeve 30 in which a split sleeve 31 is provided for abuttingly retaining the ferrules F of the both connector plugs P and P by internally inserting and fitting the optical plugs P from the both ends of the fitting portions R1 and R2.

As shown in Fig. 5A, a normal (standard) type LC-type simplified connector plug P having a spring 140 is fitted to one fitting portion R2 of the LC-type adapter Q.

Further, as shown in Fig. 5B, the pre-assembly type LC-type simplified connector plug P1 having two parts, that is, the coupling sleeve S and the ferrule F is fitted to the other fitting portion R1 of the LC-type adapter Q. Alternatively, the connector plug P may be fitted to the fitting portion R1 of the LC-type adapter Q, and the connector plug P1 may be fitted to the fitting portion R2 of the LC-type adapter Q. In this case, when they are fitted, the projection 2B of the latch 2 is engaged with a locked portion V (see Fig. 5A) inside of the fitting portions R1 and R2 of the LC-type adapter Q, thereby preventing the connector plugs P and P1 from being came off from the locked portion V.

The normal type optical connector plug P includes a frame 120 which is made up of a ferrule flange portion 120A retaining the ferrule F and a protective cylindrical portion 120B, a tube 130 for leading out an optical fiber core wire L which is extended out of the rear end of the ferrule F, a spring 140 which presses the frame 120 toward the front end side, a coupling sleeve 101 which accommodates the ferrule F and the spring 140 and has on an upper surface with the latch for engaging with and disengaging from the LC-type adapter, and a cylindrical extender cap 108 which retains the rear end of the spring 140 and fits the frame 120 to the coupling sleeve 101 as well as has a rear portion to which the boot B can be attached (see Figs. 13A, 13B and 14 of the prior art mentioned above).

### <Second Embodiment>

A description will be given in detail below of a second embodiment according to the present invention with reference to Figs. 6A to 6C, Figs. 7A to 7E, Figs. 8A to 8E, Figs. 9A to 9E, Fig. 10, Fig. 11 and Figs. 12A to 12B. Similar reference numerals indicate constituent elements similar to those of the first embodiment mentioned above, and its detailed description will be omitted or simplified.

### <Structure of assembly type LC-type simplified connector plug>

An LC-type simplified connector plug P2 according to the second embodiment is an assembly type simplified plug which includes three parts, that is, a coupling sleeve S, a ferrule F and a holder H, as main constituent members.

As shown in Figs. 6A to 6C, Figs. 7A to 7E, Figs. 8A to 8E, Figs. 9A to 9E, Fig. 10 and Fig. 11, the coupling sleeve S is provided with a main body 1 whose outer peripheral surface is formed into a quadrangle, and a latch 2 for engaging with and disengaging from the LC-type adapter Q provided on an upper surface of the main body 1. A large-diameter cylindrical opening 3 is formed at the head of the main body 1 of the coupling sleeve S, and the opening 3 and a cylindrical holder fitting insertion hole 9 whose front end for fitting and retaining the holder H provided at the innermost center has a small-diameter portion 9A and whose rear end has a large-diameter portion 9B are connected consecutively passing through the substantially center of the main body 1.

As shown in Figs. 10 and 11, the holder H is formed of a main body 8 having a substantially square cylindrical shape which is inserted into the large-diameter portion 9B of the holder fitting insertion hole 9 and has at the head of the main body 8 a small-diameter protrusion 8A which is internally fitted to and retained by the small-diameter portion 9A at the front end of the holder fitting insertion hole 9, and also has at the rear end side of the main body 8 of the holder H a large-diameter quadrangle flange portion 8B which is locked to an opening end edge at the rear side of the main body 1 of the coupling sleeve S. A ferrule fitting insertion hole 11 is formed at the center of the small-diameter protrusion 8A, and an insertion hole 13 for the optical fiber core wire L is formed at the rear end of the ferrule fitting insertion hole 11. The ferrule fitting insertion hole 11 and the insertion hole 13 of the optical fiber L are connected consecutively passing through the center of the holder H.

Further, as shown in Figs. 6A to 6C, Fig. 7B, Fig. 9B and Fig. 11, a locking hole 14B having a substantially square hole shape is formed at the right and left opposing sides of an outer peripheral surface of the main body 1 of the coupling sleeve S, and a locking claw 14A having a substantially wedge-shaped projection is formed at the right and left opposing sides of the main body 8 of the holder H correspondingly to the locking hole 14B. When the holder H is fitted to the holder fitting and insertion hole 9, the flange portion 8B of the main body 8 of the holder H is locked to the opening edge at the rear side of the main body 1 of the coupling sleeve S, and at the same time the locking claw 14A is fitted and locked to the locking hole 14B.

As shown in Figs. 6A to 6C, Figs. 8A to 8E, Figs. 9A to 9E, Fig. 10 and Fig. 11, the main body 8 of the holder H has at the rear end a cylindrical projection 12 which is communicated with the insertion hole 13 of the optical fiber core wire L, thereby allowing opening of the boot B at the front end to be fitted to the projection 12, as occasion demands. As shown in Figs. 6A to 6C, Fig. 7E, Figs. 8A, 8B, 8D and Fig. 10, a key groove 15 which is formed into a slit shape along the front in a cylindrical axis direction from the opening side at the rear end thereof is formed on an upper wall surface of the main body 1 of the coupling sleeve S, and a key projection 16 is formed correspondingly thereto on an upper wall surface of the main body 8 of the holder H so that the main body 8 is inserted along the key groove 15.

Next, a description will be given of an example of use and operation of the second embodiment thus configured as above.

### <Optical connector device using assembly type LC-type simplified connector plug>

As shown in Figs. 12A to 12B, an optical connector device according to the second embodiment is provided at the both ends of the LC-type adapter Q with fitting portions R1 and R2 (plug insertion holes) for inserting the optical connector plug thereinto, and is provided at the inner center with a sleeve 30 which is internally provided with a split sleeve 31 for abuttingly retaining the ferrules F of the both connector plugs P and P by internally inserting and fitting the optical plugs P from the both ends of the fitting portions R1 and R2.

As shown in Fig. 12A, the normal type LC-type optical connector plug P having the structure mentioned above with the spring 140 is fitted to one fitting portion R2 of the LC-type adapter Q. This portion has the same structure as that of Fig. 5B as previously mentioned.

Further, as shown in Fig. 12B, the assembly type LC-type simplified connector plug P2 having three parts, that is, the coupling sleeve S, the ferrule F and the holder H is fitted to the other fitting portion R1 of the LC-type adapter Q. Alternatively, the connector plug P may be fitted to the fitting portion R1 of the LC-type adapter Q, and the connector plug P2 may be fitted to the fitting portion R2 of the LC-type adapter Q. In this case, when they are fitted, the projection 2B of the latch 2 is engaged with a locked portion V (see Fig. 12A) inside of the fitting portions R1 and R2 of the LC-type adapter Q, thereby preventing the connector plugs P and P1 from being came off.

As mentioned above, according to the present invention, the coupling sleeve S and the ferrule F are engaged with each other only by inserting the ferrule F into the ferrule fitting insertion hole 4 from the opening 3 of the main body 1 of the coupling sleeve S. This enables an easy fixation of the ferrule F at a predetermined position by one-touch operation, and eliminates the need for a tool. Further, in the present invention, sharing (utilizing) the spring 140 of the optical connector plug P attached to the one side of the LC-type adapter Q dispenses with the spring 140 of the LC-type simplified connector plug P1 attached to the other side.

In a pre-assembly type LC-type simplified connector plug (P1) including two parts, that is, a coupling sleeve (S) and a ferrule (F), the coupling sleeve (S) is provided with a main body (1) whose outer peripheral surface is formed into a quadrangle and a latch (2) for engaging with and disengaging from an LC-type adapter (Q) provided on an upper surface of the main body (1), the main body (1) has at the front end thereof a large-diameter cylindrical opening (3), and has at the center of the opening (3) a small-diameter cylindrical ferrule insertion hole (4) for fitting and retaining the ferrule (F), and opening (3) and the ferrule insertion hole (4) are communicated with an insertion hole for an optical fiber core wire passing through the substantially center of the main body (1).

### REFERENCE SINGS LIST

P: optical connector plug (standard plug)
P1, P2: LC-type simplified connector plug
Q: LC-type adapter
R1, R2: fitting portion (plug insertion hole)
S: coupling sleeve
F: ferrule
H: holder
V: locked portion
B: boot
L: optical fiber core wire (cord)
1: main body
2: latch
3: opening
4, 11: ferrule fitting insertion hole
4A: step
5, 12: projection
8: main body
8A: small-diameter protrusion
8B: flange portion
9: holder fitting insertion hole
9A: small-diameter portion at front end
9B: large-diameter portion at rear end
10, 13: insertion hole for optical fiber core wire
14A: locking claw
14B: locking hole
15: key groove
16: key projection
101: coupling sleeve
102: latch
102A: support portion
102B: projection
102C: locking projection
103: opening
108: extender cap
111: flange portion
115: locking hole
116: locking claw
112: projection
120: frame
120A: ferrule flange portion
120B: protective cylindrical portion
130: tube
140: spring

## Claims

1. A pre-assembly type LC-type simplified connector plug comprising:
a coupling sleeve; and
a ferrule,
wherein the coupling sleeve comprises:
a main body whose outer peripheral surface is formed into a quadrangle; and
a latch for engaging with and disengaging from the LC-type adapter provided on an upper surface of the main body,
wherein the main body has at the head thereof a large-diameter cylindrical opening, and has at the center of the opening a small-diameter cylindrical ferrule fitting insertion hole for fitting and retaining the ferrule so that the opening and the ferrule fitting insertion hole are connected consecutively to an insertion hole for an optical fiber core wire passing through the substantially center of the main body,
wherein the rear end of the ferrule is inserted into the ferrule fitting insertion hole from the opening side, and
wherein the front end of the ferrule is protruded out of an opening of the front end of the main body.

2. The LC-type simplified connector plug according to claim 1,
wherein the main body has at the tail thereof a cylindrical projection which communicates with the ferrule fitting insertion hole, and an opening at the front end of a boot is formed in a fittable manner in the projection opening, as occasion demands.

3. An LC-type adapter comprising:
a fitting portion provided at the both ends thereof for inserting an optical connector plug; and
a sleeve which is provided at the inner center thereof, into and to which the optical connector plug is inserted and fitted from the both ends of the fitting portion, and abuttingly retains the ferrules of the both connector plugs,
wherein the LC-type adaptor comprises at either one of the fitting portions at the both ends thereof a coupling sleeve and a ferrule, the coupling sleeve comprises a main body whose outer peripheral surface is formed into a quadrangle, and a latch for engaging with and disengaging from the LC-type adapter provided on an upper surface of the main body, the main body has at the head thereof a large-diameter cylindrical opening, and has at the center of the opening a small-diameter cylindrical ferrule fitting insertion hole for fitting and retaining the ferrule so that the opening and the ferrule fitting insertion hole are connected consecutively to an insertion hole of an optical fiber core wire passing through the substantially center of the main body, a pre-assembly type LC-type simplified connector plug in which the rear end side of the ferrule is inserted into the ferrule fitting insertion hole from the opening side, and the front end of the ferrule is protruded out of an opening at the head of the main body is fitted, and
wherein an optical connector adaptor comprises at the fitting portion a frame which retains the ferrule, a spring which presses the frame toward the front end side thereof, a coupling sleeve which accommodates the ferrule and the spring, and an extender cap which retains the rear end of the spring and fits the spring to the coupling sleeve.

4. An assembly type LC-type simplified connector plug comprising:
a coupling sleeve;
a ferrule; and
a holder,
wherein the coupling sleeve comprises:
a main body whose outer peripheral surface is formed into a quadrangle; and
a latch for engaging with and disengaging from the LC-type adapter provided on an upper surface of the main body,
wherein the main body has at the head thereof a large-diameter cylindrical opening, and has at the inner center of the opening a cylindrical holder fitting insertion hole whose front end for fitting and retaining the head of the holder has a small-diameter portion and whose rear end has a large-diameter portion so that the opening and the holder fitting insertion hole are connected consecutively to an insertion hole for an optical fiber wire passing through the substantially center of the main body,
wherein the holder has at the front end thereof a ferrule fitting insertion hole into which the rear end of the ferrule is inserted, and has an insertion hole for an optical fiber core wire which is communicated with the rear side of the ferrule fitting insertion hole,
wherein a ferrule is inserted into the ferrule fitting insertion hole at the head of the holder, and
wherein the holder with the ferrule is integrated so as to be fitted and retained by the small-diameter portion at the front end of the holder fitting insertion hole of the main body, and the ferrule is protruded out of the head of the main body.

5. The LC-type simplified connector plug according to claim 4, wherein the coupling sleeve comprises:
a main body whose outer peripheral surface is formed into a quadrangle; and
a latch for engaging with and disengaging from the LC-type adapter provided on an upper surface of the main body,
wherein the main body has at the head thereof a large-diameter cylindrical opening, and has at the center of the opening a cylindrical holder fitting insertion hole so that the opening and the holder fitting insertion hole are connected consecutively passing through the substantially center of the main body, and
wherein a locking hole for locking a locking claw which is provided on the side of the holder fitted to the holder fitting insertion hole is formed on the side of an outer peripheral surface of the main body.

6. The LC-type simplified connector plug according to claim 4,
wherein the holder has at the front end thereof a ferrule fitting insertion hole into which the rear end of the ferrule is inserted, and a small-diameter protruding portion which is fitted and retained by a small-diameter portion at the front end of the holder fitting insertion hole of the main body, and has at the tail of the holder a large-diameter quadrangle flange portion which is locked to the tail of the main body, and has at the side of the holder a locking claw for being locked to a locking hole which is formed on the side of an outer peripheral surface of the main body.

7. The LC-type simplified connector plug according to claim 4,
wherein the holder has at the tail thereof a cylindrical projection which is communicated with the ferrule fitting insertion hole and an insertion hole for an optical fiber core wire, and
wherein an opening at the front end of a boot is fittingly formed in the projection, as occasion demands.

8. An optical connector device in an LC-type adapter, the LC-type adapter comprising:
a fitting portion for inserting an optical connector plug provided at the both ends thereof; and
a sleeve which is provided at the inner center thereof, into and to which the ferrule of the optical connector plug is inserted and fitted from the both ends thereof, and abuttingly retains the ferrules of the both connector plugs,
wherein the LC-type adaptor comprises in either one of the fitting portions at the both ends thereof a coupling sleeve, a ferrule and a holder, the coupling sleeve comprises a main body whose outer peripheral surface is formed into a quadrangle, and a latch for engaging with and disengaging from the LC-type adapter provided on an upper surface of the main body, wherein the main body has at the head thereof a large-diameter cylindrical opening, and has at the inner center of the opening a cylindrical holder fitting insertion hole whose front end for fitting and retaining the head of the holder has a small-diameter portion and whose rear end has a large-diameter portion so that the opening and the holder insertion hole are formed consecutively passing through the substantially center of the main body,
wherein the holder has at the front end thereof a ferrule insertion hole for inserting the ferrule, an insertion hole for an optical fiber core wire which is communicated with the rear end of the ferrule insertion hole, and a small-diameter protrusion which is fitted and retained by a small-diameter portion at the front end of the holder insertion hole of the main body, as well as has at the rear end side a large-diameter quadrangle flange portion which is locked to the rear of the main body, and has at the side a locking claw for being locked to a locking hole which is formed on the side of an outer peripheral surface of the main body,
wherein a pre-assembly type LC-type simplified connector plug in which the rear end side of the ferrule is inserted into the ferrule insertion hole at the head of the holder, and the holder with the ferrule is integrated so as to be fitted and retained by the small-diameter portion at the front end of the holder insertion hole at the head of the holder is protruded out of the front end of the coupling sleeve, and
wherein the LC-type adaptor comprises at the other fitting portion a frame which retains the ferrule, a spring which presses the frame toward the front end side, a coupling sleeve which accommodates the ferule and the spring, and an extender cap which retains the rear end of the spring and fits the spring to the coupling sleeve of the main body.
